# EUROPÄISCHE PATENTSCHRIFT

(11) **EP 4 204 719 B1**
(45) Veröffentlichungstag und Bekanntmachung des Hinweises auf die Patenterteilung: **23.10.2024**
(21) Anmeldenummer: 22772493.7
(22) Anmeldetag: 01.09.2022
(51) Int. Cl.: F16K 5/06, F16K 5/08, F16K 27/06

(54) **KUGELHAHN, INSBESONDERE ZUR EXPLOSIONSENTKOPPLUNG IN PROZESSROHRLEITUNGEN**
BALL VALVE, IN PARTICULAR FOR EXPLOSION ISOLATION IN PROCESS PIPELINES
SOUPAPE À BILLE, EN PARTICULIER POUR LA PROTECTION CONTRE LES EXPLOSIONS DANS DES CONDUITES DE TRAITEMENT

(30) Priorität: 21.10.2021 DE 102021211893
(43) Veröffentlichungstag der Anmeldung: 05.07.2023
(73) Patentinhaber: Rico Sicherheitstechnik AG, 9100 Herisau (CH)
(72) Erfinder: HAFNER, Roland, 9240 Uzwil (CH); KERN, Jürgen, 8570 Weinfelden (DE); AGATONOVIC, Aleksandar, 9240 Uzwil (CH); ZELLWEGER, Daniel, 9056 Gais (CH); ALLGÄUER, Mario, 8370 Sirnach (CH)
(74) Vertreter: Rau, Schneck & Hübner Patentanwälte Rechtsanwälte PartGmbB
(86) Internationale Anmeldenummer: PCT/EP2022/074296
(87) Internationale Veröffentlichungsnummer: WO 2023/066558

(56) Entgegenhaltungen:
- DE-A1- 102019 112 559
- DE-U1- 202016 106 129
- US-A- 3 348 804

## Beschreibung

Die vorliegende Patentanmeldung nimmt die Priorität der deutschen Patentanmeldung DE 10 2021 211 893.3 in Anspruch, deren Inhalt durch Bezugnahme hierin aufgenommen wird.

Die Erfindung betrifft einen Kugelhahn, der insbesondere auch zur Explosionsentkopplung in Prozessrohrleitungen eingesetzt werden soll.

Zum Hintergrund der Erfindung ist festzuhalten, dass üblicherweise zur Explosionsentkopplung in Prozesssystemen Schieber, Rückschlagklappen oder Quench-Systeme eingesetzt werden. Für den Anwendungsfall von pneumatischen Fördersystemen, wie sie beispielsweise beim Befüllen von Silos eingesetzt werden, sind solche Schutzeinrichtungen hinsichtlich Abrasion und Produktablagerungen problematisch.

Aus dem Stand der Technik sind Kugelhahn-Anordnungen zum Einsatz als Explosionsschutzelement grundsätzlich bekannt. So offenbart die CN 211 288 891 U einen Kugelhahn für eine Gasleitung mit automatischer Schließfunktion mit Explosionsschutz. Der Kugelhahn weist ein Verbindungsrohr auf, welches innerhalb eines Ventilrohrs verläuft und im Durchmesser deutlich kleiner ist. Sofern sich das Gas entzündet, verbreitet sich die Explosion schneller durch das Verbindungsrohr und erzeugt eine Explosion in einem elliptischen Rohr. Hierdurch wird die Luft oberhalb der elliptischen Kolbenplatte entzogen und der Kolben bewegt sich nach oben. Der Kolben überträgt über eine Gewindestange eine Drehbewegung auf den Kugelkörper und schließt den Kugelhahn, bevor die Explosion diesen erreicht. Der Kugelhahn wird durch Gummidichtungen angedichtet. Aufbau und Funktionsweise dieses bekannten Kugelhahns sind komplex.

Die CN 208 252 809 U zeigt ebenfalls einen Explosionsschutz-Kugelhahn mit einem Kugelkörper, welcher im Falle es plötzlichen Druckanstiegs, beispielsweise durch die Druckwelle einer Explosion, automatisch geschlossen wird. Im Falle einer Explosion breitet sich die Druckwelle in ein Führungsrohr aus, welches einen Kolben umfasst. Der Kolben umfasst eine Gewindestange, welche ein Zahnrad antreibt. Das Zahnrad steht mit dem Kugelkörper über einen Schaft in Wirkverbindung. Der Kugelhahn umfasst eine Reihe von Begrenzungsblöcken, die eine Endposition des Kugelkörpers begrenzen. Auch hier ist eine aufwändige Konstruktion zu verzeichnen.

Die US 10 030 784 B2 offenbart eine Kugelhahnanordnung mit einer dreifachen Dichtung, die aufgrund dieses Aufbaus ebenfalls aufwändig ist. Dessen Kugelkörper wird hierbei über Dichtlippen geführt.

Die WO 2015/128 058 A1 zeigt einen Kugelhahn mit einer Ventilkugel, die eine Fluidverbindung zwischen Fluidanschlüssen absperren kann, sowie mit Sensoranschlüssen, die die Schaltposition der Ventilkugel ablesen können. Der Kugelhahn verfügt ferner über einen Anschlagzapfen, welcher im Zusammenspiel mit einer Kurvenscheibe die Endstellungen der Ventilkugel bestimmt. Die offenbarte Sensorik bedeutet einen zusätzlichen konstruktiven Aufwand.

Als weitere Druckschriften sind die US 3 737 145 A, US 3 179 121 A und US 4 867 414 A zu nennen. Die erstgenannte Veröffentlichung zeigt einen Kugelhahn mit einem Ventilkörper, in dessen abgeplatteten Ober- und Unterseiten Vertiefungen zur Bildung von Rippen angeordnet sind. Diese dienen zur Versteifung des mehrteilig und nicht massiv aufgebauten Kugel-Ventilkörpers. Bei dem Kugelhahn gemäß der US 3 179 121 A ist ein einfacher Anschlag für die Drehbewegung des Ventilkörpers außen am Ventilgehäuse beim Lager des Betätigungsgriffs vorgesehen. Die US 4 867 414 A offenbart einen Kugelhahn, bei dem Anschlagfortsätze auf dem Ventilkörper mit kreisbogenförmigen Schlitzen in Zwischenplatten zusammenwirken. Diese Konstruktion erhöht die träge Masse des Ventilkörpers und ist für eine Explosionsschutzanwendung damit sehr nachteilig.

Die US 3 348 804 A beschreibt einen Kugelhahn. Die DE 10 2019 112 559 A1 betrifft ein Wegeventil mit einem Ventilgehäuse. Die DE 20 2016 106 129 U1 beschreibt einen Mehrwege-Kugelhahn.

Der Erfindung liegt die Aufgabe zugrunde, einen universell für normale Absperr- und Explosionsschutz-Zwecke einsetzbaren Kugelhahn zu schaffen, der bei konstruktiver Einfachheit in seiner Massenträgheit zur Verbesserung des Ansprechverhaltens im Explosionsschutz-Fall verringert ist.

Diese Aufgabe wird laut Patentanspruch 1 durch einen Kugelhahn mit folgenden Merkmalen gelöst:
- ein zur Durchflussrichtung koaxiales Gehäuserohr,
- jeweils an den Stirnseiten des Gehäuserohrs angeflanschte Lagerringe, die in die Innenöffnung des Gehäuserohrs eingreifende Lagerschultern aufweisen,
- einem zwischen den Lagerschultern über darin eingesetzte Dichtringe um eine senkrecht zur Durchflussrichtung verlaufende Drehachse drehbar angetrieben zwischen einer jeweils beanschlagten Geschlossen- und Offen-Stellung gelagerte Ventilkörper in der Grundform eines Kugelrings mit einer durchgehenden Durchströmungsöffnung,

- einen Drehantrieb für den Ventilkörper, und
- direkt in den Ventilkörper eingeformte Anschlagvertiefungen, die Endanschläge für Anschlagvorsprünge am Gehäuserohr zur Definition der Geschlossen- und Offen-Stellung des Ventilkörpers bilden,
- wobei die Anschlagvertiefungen einen kreissegmentförmigen Umriss aufweisen, wobei die Endanschläge durch die Schnittzonen zwischen der Kreisbogenkante und der Kreissehnenkante der Anschlagvertiefungen gebildet sind.

Durch die Kombination der vorstehenden Merkmale wird eine gute Dichtwirkung bei gleichzeitig schnellem Ansprechen des Kugelhahns erzielt. Da der Ventilkörper - im Gegensatz zu herkömmlichen Kugelhähnen - nicht über Halbschalen, sondern die erwähnten Dichtringe gelagert und abgedichtet wird, kann über die Zustellung der Lagerringe zum Gehäuserohr über die entsprechenden Befestigungsschrauben ein optimaler Kompromiss zwischen Dichtigkeit und möglichst geringen Reibungskräften zwischen Ventilkörper und der als Führung dienenden Dichtungen erzielt werden. Geringe Reinigungskräfte führen zusammen mit der Masseverringerung aufgrund der im Ventilkörper angelegten Anschlagvertiefungen zur einer deutlich geringeren Trägheit des Ventilkörpers, womit dessen Ansprechverhalten im Explosionsfall deutlich verbessert wird. Da aufgrund der Grundkonstruktion des Kugelhahns die Anschlag-Funktionsflächen und auch die Übertragungselemente zum Antrieb direkt in den Ventilkörper integrierbar sind, können auch hohe Beschleunigungskräfte übertragen werden.

In den abhängigen Ansprüchen sind bevorzugte Weiterbildungen des erfindungsgemäßen Kugelhahns angegeben. So kann der Ventilkörper rechtwinklig zu seiner Drehachse angeordnete, außenseitige Planflächen zur Ausbildung einer kombinierten Kugelring-Kugelschicht-Form des Ventilkörpers aufweisen, wobei die Anschlagvertiefungen in die jeweiligen Planflächen eingeformt sind. Insgesamt ist der Ventilkörper damit in seiner Konfiguration an den Einsatzzweck optimal angepasst.

Die kreissegmentförmigen Anschlagvertiefungen sind damit für die Kinematik des Ventilkörpers besonders gut ausgelegt, was umso mehr zutrifft, wenn der Radius der Kreisbogenkante dem Abstand der Anschlagvorsprünge von der Drehachse derart entspricht, dass die Kreisbogenkante als Führungsfläche bei der Drehbewegung des Ventilkörpers fungiert. Diese zusätzliche Führung des Ventilkörpers kommt neben dem möglichst gleichmäßigen Drehverhalten des Ventilkörpers auch der Dichtqualität des Kugelhahns zugute.

Die eingangs erwähnte variable Zustellung der Lagerring zur Einstellung der Beaufschlagung des Ventilkörpers durch die Dichtringe lässt sich konstruktiv besonders elegant durch eine variable Einschraubbarkeit der Lagerringe in das Gehäuserohr parallel zur Durchflussrichtung realisieren.

Einer weiteren Verminderung des Konstruktions- und Fertigungsaufwandes bei gleichzeitig verbesserter Kinemathek kommt die mögliche einstückig Integration eines Kupplungsansatzes zur Verbindung mit dem Drehantrieb des Kugelhahns in den Ventilkörper zugute.

Eine bevorzugte Ausführungsform sieht Flanschgewinde auf den in Durchflussrichtung weisenden Außenseiten der Lagerringe zum Anflanschen jeweils einer Rohrleitung vor. Die Lagerringe führen damit eine vorteilhafte Doppelfunktion aus.

Weiterhin können für einen stabilen, insbesondere explosionsfesten Konstruktionsaufbau im oder am Gehäuserohr des Kugelhahns Drehlagersockel für den Ventilkörper und einen auf gesattelten Drehantrieb angeordnet sein.

Alternativen für den Drehantrieb sehen einen pneumatischen, insbesondere Gasgenerator-Antrieb, oder einen elektrischen Antrieb vor. Die Auslösung im Explosionsfall kann dann beispielsweise über einen Reissdraht einer Berstscheibe oder über eine Steuerung mit angeschlossener Sensorik erfolgen.

Weitere Merkmale, Einzelheiten und Vorteile der Erfindung ergeben sich aus der nachfolgenden Beschreibung eines Ausführungsbeispiels anhand der beigefügten Zeichnungen. Es zeigen:
- Fig. 1: eine perspektivische Darstellung eines Kugelhahns,
- Fig. 2 und 3: Vertikalschnitte des Kugelhahns in Durchflussrichtung und quer dazu,
- Fig. 4: eine perspektivische Ansicht des Ventilkörpers mit zugehörigen Lagern,
- Fig. 5 und 6: perspektivische Explosionsdarstellungen des Ventilkörpers mit fußseitigem Lager und Anschlagelementen in Offen- und Geschlossen-Stellung,
- Fig. 8 und 7: Draufsichten auf den Ventilkörper mit Anschlagelementen in Offen- und Geschlossen-Stellung, sowie
- Fig. 9 bis 12: Horizontalschnitte des Kugelhahns gemäß Schnittlinie IX-XI nach Fig. 3 in vier Drehstellungen zwischen Offen- und Geschlossen-Stellung.

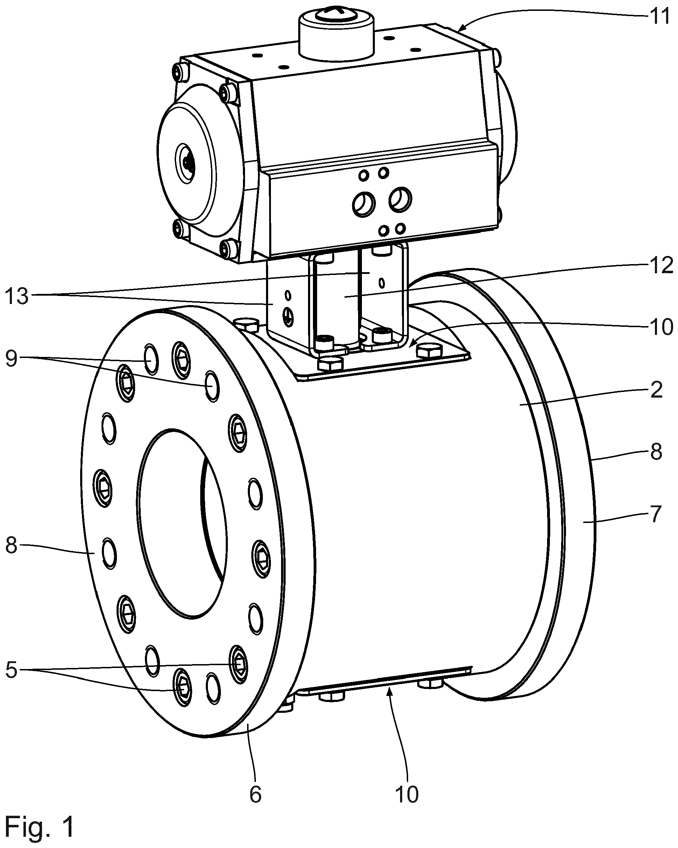

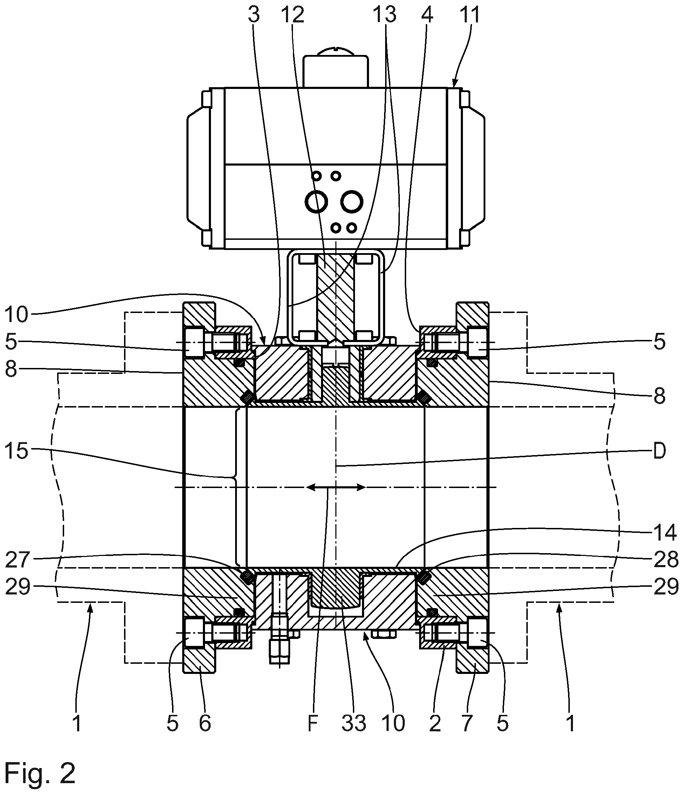

Wie aus den Fig. 1 bis 3 hervorgeht, weist der gezeigte Kugelhahn zur Explosionsentkopplung in einer in Fig. 2 gestrichelt dargestellten Prozessrohrleitung 1 ein zur Durchflussrichtung F koaxiales Gehäuserohr 2 auf, an dessen Stirnseiten 3, 4 über parallel zur Durchflussrichtung F eingesetzte Befestigungsschrauben 5 jeweils ein Lagerring 6, 7 angebracht ist. Letztere weisen in ihren Außenseiten 8 von außen eingearbeitete Flanschgewinde 9 auf, über die die Prozessrohrleitung 1 mit dem Kugelhahn verschraubt ist.

Wie ferner aus Fig. 1 bis 3 hervorgeht, dient ein oben am Gehäuserohr 3 sitzender Drehlagerkörper 10 als Lagersockel für einen mittels Tragstreben 13 aufgesattelten Drehantrieb 11, der beispielsweise pneumatisch aktivierbar ist. Über geeignete Detektoren wird ein Explosionsfall in der Prozessrohrleitung 1 erfasst und der Drehantrieb 11 entsprechend betätigt, wodurch die Antriebswelle 12 schlagartig um 90° um die Drehachse D des Kugelhahns gedreht wird, wie später noch näher erläutert wird.

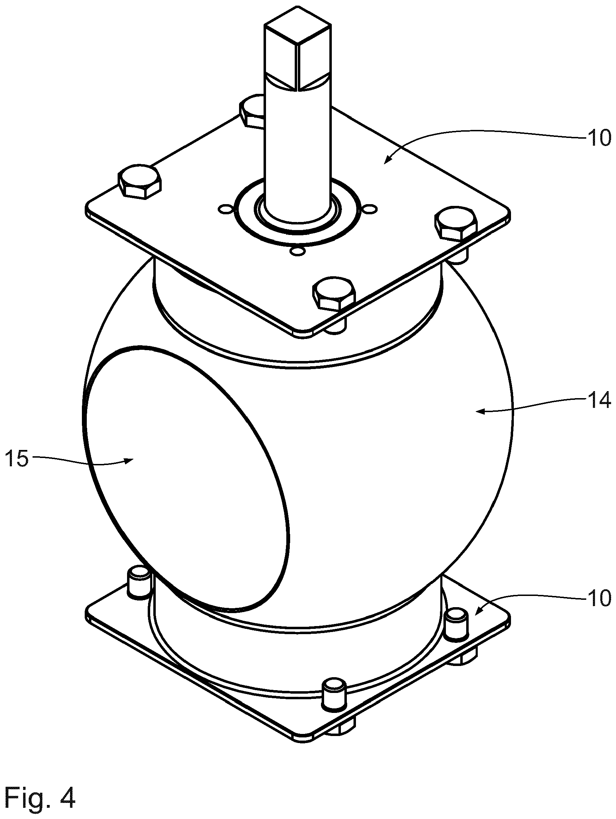

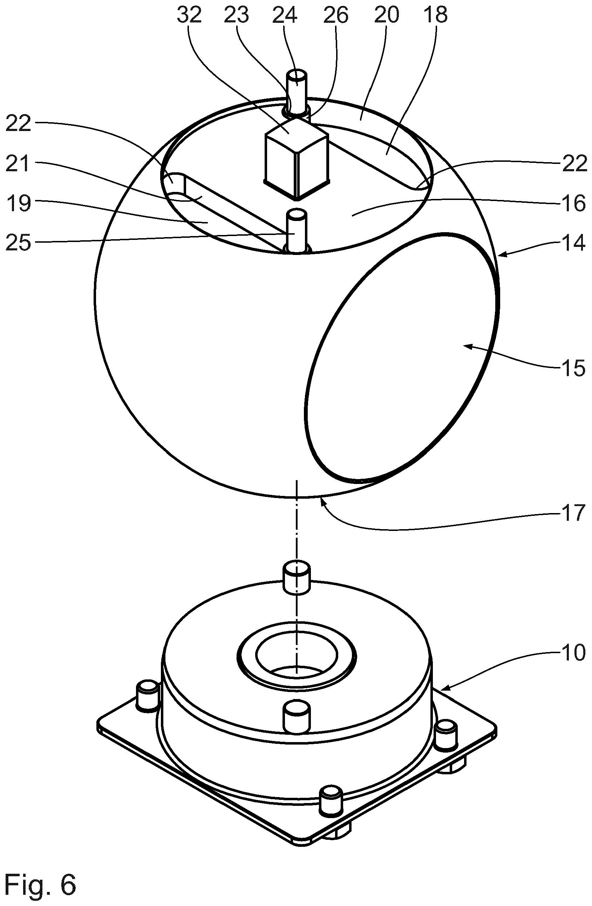

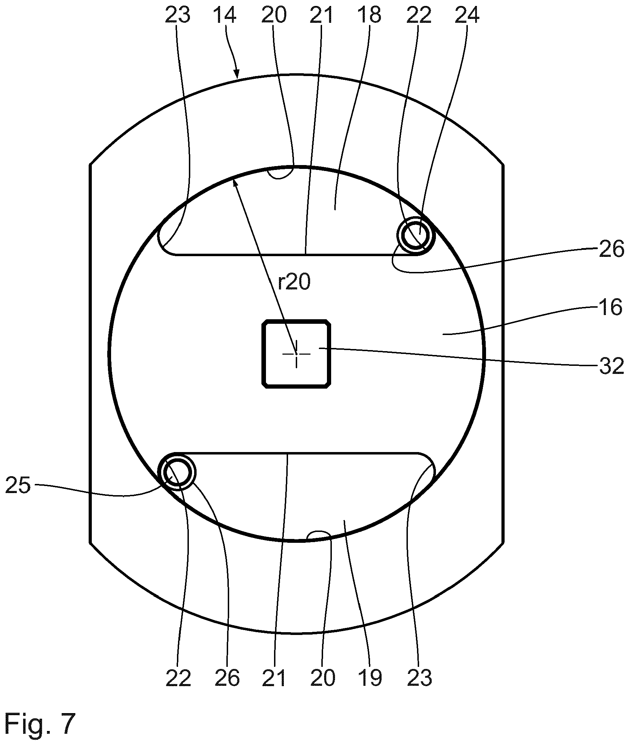

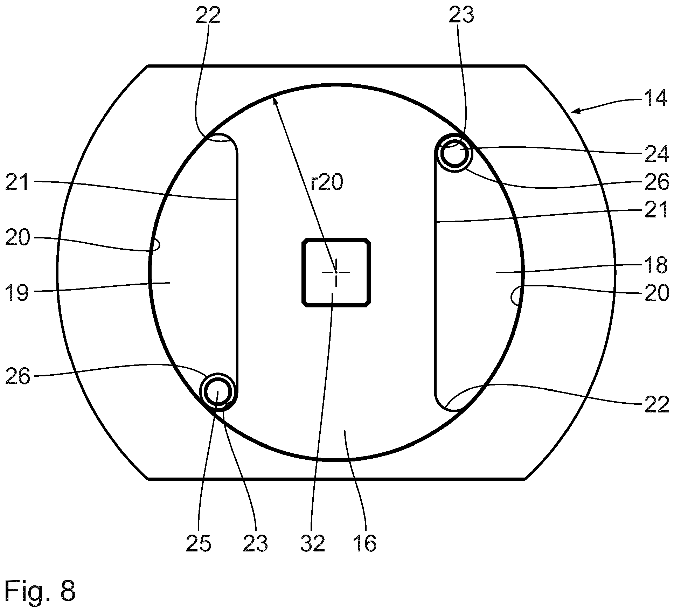

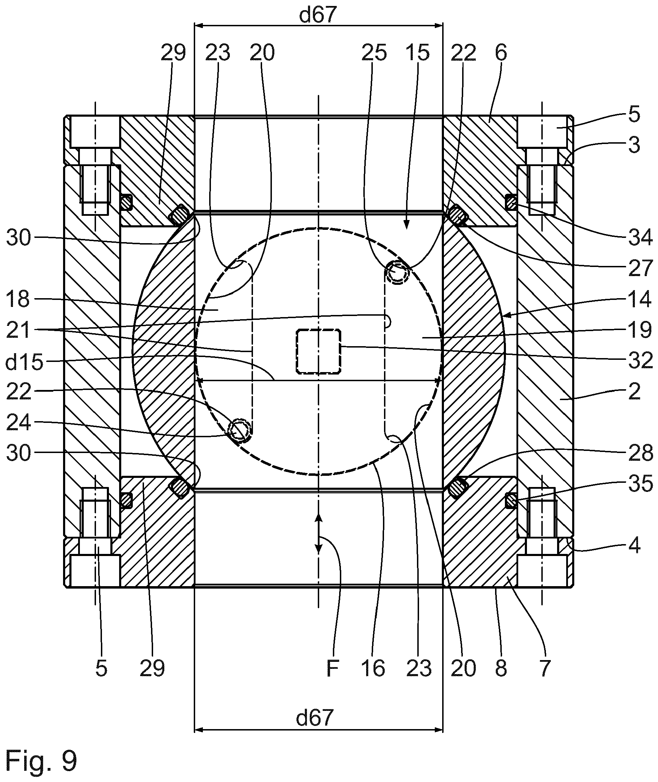

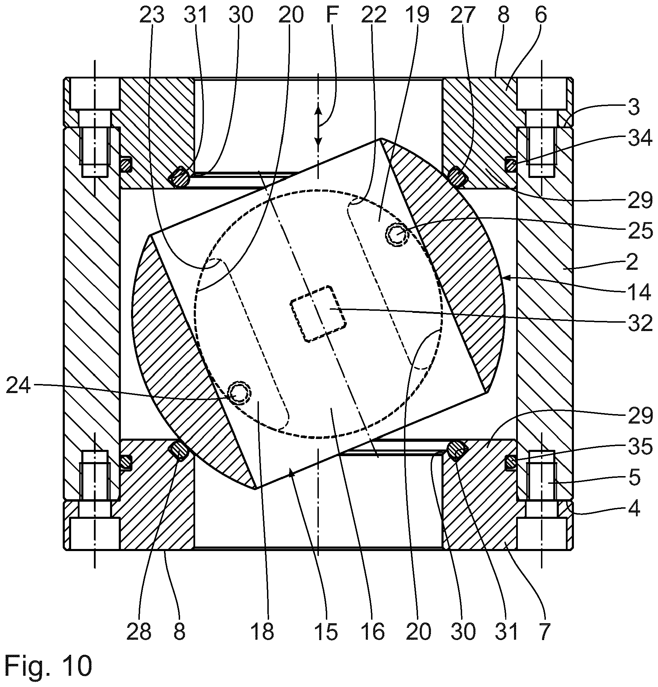

Wie aus Fig. 2 bis 12 hervorgeht, weist der Kugelhahn einen Ventilkörper 14 auf, der die Grundform eines Kugelrings mit einer durchgehenden Durchströmungsöffnung 15 mit der Durchflussrichtung F zeigt. Der Durchmesser d15 der Durchströmungsöffnung 15 entspricht dabei dem freien Innendurchmesser d67 der Lagerringe 6, 7, sodass in der geöffneten Stellung des Kugelhahns - siehe insbesondere Fig. 9 - eine gleichmäßig durchgehende Durchströmungsöffnung 15 ohne Hinterschneidungen und Kanten gebildet ist.

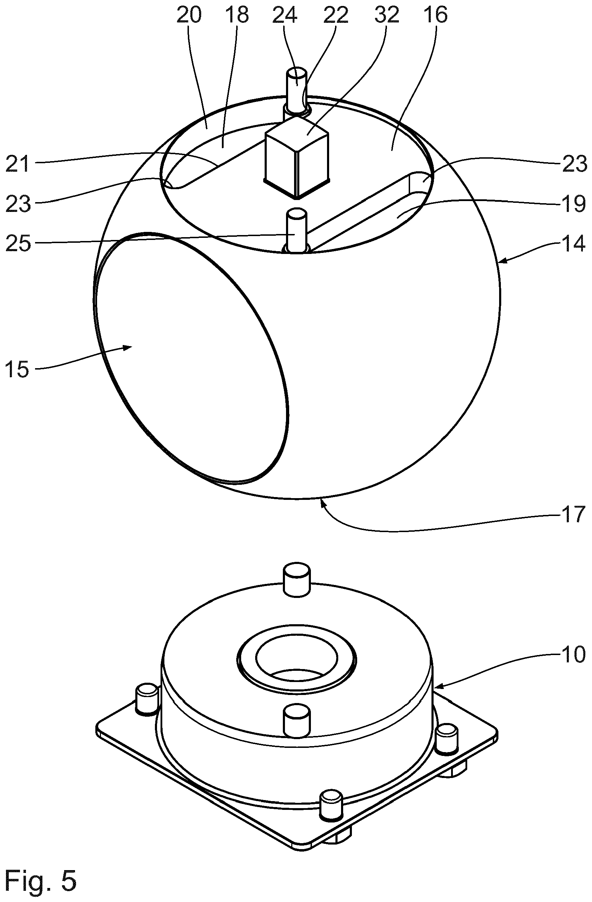

Wie aus Fig. 5 bis 8 hervorgeht, weist der Ventilkörper 14 ferner rechtwinklig zu seiner Drehachse D angeordnete, außenseitige Planflächen 16, 17 oben und unten auf, sodass der Ventilkörper 14 insgesamt eine kombinierte Kugelring-Kugelschicht-Form annimmt. In den oberen und unteren Planflächen 16, 17 sind Anschlagvertiefungen 18, 19 mit einem kreissegmentförmigen Umriss einstückig eingeformt, wobei die abgerundeten Schnittzonen zwischen der Kreisbogenkante 20 und der Kreissehnenkante 21 jeweils Endanschläge 22, 23 bilden, die mit entsprechenden Anschlagvorsprüngen 24, 25 an den Drehlagerkörpern 10 wechselwirken. Diese Anschlagvorsprünge 24, 25 sind mit dämpfenden Schutzhülsen 26 überzogen, um mechanische Überbeanspruchungen und akustische Belastungen beim Auslösen des Explosionsschutz-Kugelhahns zu minimieren. Der Radius r20 der Kreisbogenkante 20 entspricht dem Außenabstand der Anschlagvorsprünge 24, 25 von der Drehachse D, sodass sie Kreisbogenkanten 21 als Führungsfläche bei der noch zu erläuternden Drehbewegung des Ventilkörper 14 dienen.

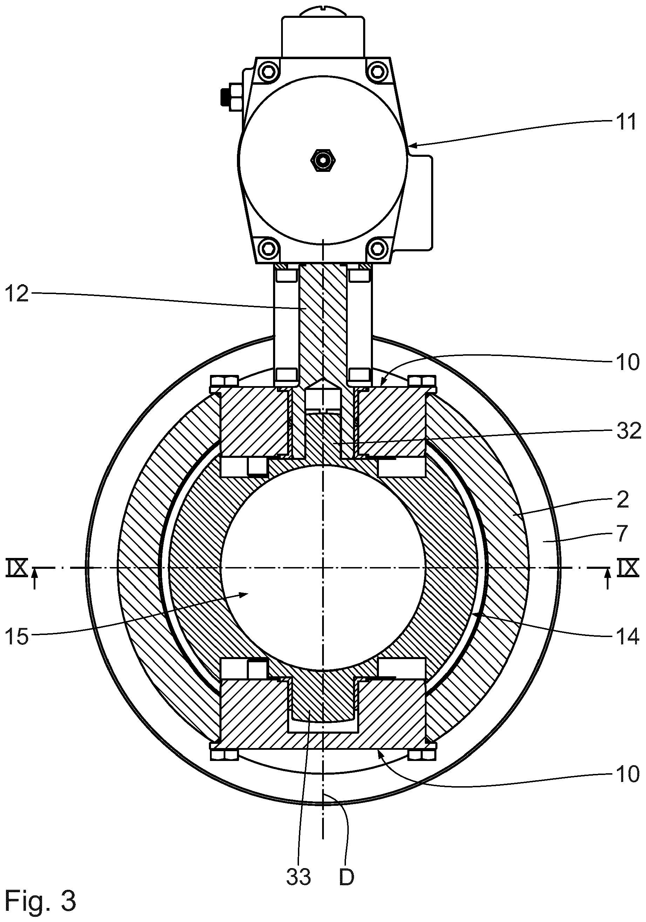

Wie ferner aus den Fig. 5 bis 8 hervorgeht, ist zentral in der Planfläche 16 ein im Umriss Vierkant-förmiger Kupplungsansatz 32 eingeformt, der mit einer entsprechenden Aufnahme (nicht gezeigt) in der Antriebswelle 12 zur Übertragung des Antriebsmomentes des Drehantriebs 11 drehfest in Eingriff steht. Gleichzeitig trägt der dortige obere Drehlagerkörper 10 zur Drehlagerung des Ventilkörpers 14 bei. Auf der dem Kupplung 32 gegenüberliegenden Planfläche 17 ist zentral ein Achsstummel 33 (siehe Fig. 2 und 3) zur Drehlagerung des Ventilkörpers 14 im unteren Drehlagerkörper 10 angeformt.

Wie insbesondere aus den Fig. 9 bis 12 hervorgeht, ist der Ventilkörper 14 durch zwei als O-Ringe ausgebildete Dichtungsringe 27, 28 abgedichtet in den Kugelhahn eingebaut und durch diese bei der Drehbewegung geführt. Die Dichtungsringe 27, 28 sind dabei am inneren Ende von Lagerschultern 29 angeordnet, mit denen die Lagerringe 6, 7 in die Innenöffnung des Gehäuserohrs 2 eingreifen. Der Dichtungsringe 27, 28 sind jeweils in Aufnahmenuten 31 eingesetzt, die in abgeschrägten Eckflanken 30 der Lagerschultern 29 einstückig eingeformt sind. Die beiden Dichtungsringe 27, 28 weisen also einen etwas größeren Durchmesser auf, wie der Innendurchmesser d15 der Durchströmungsöffnung 15.

Der Funktionsablauf im Kugelhahn ist nun anhand der Fig. 9 bis 12 zu erläutern. In der in Fig. 9 gezeigten Offen-Stellung des Ventilkörpers 14 ist die Durchströmungsöffnung 15 komplett geöffnet, die Dichtungsringe 27, 28 liegen dicht um die Durchströmungsöffnung 15 zwischen Ventilkörper 14 und Lagerringe 6, 7 und die Anschlagvorsprünge 24, 25 liegen an den Endanschlägen 22 an.

Bei Aktivierung des Kugelhahns aufgrund eines Explosionsfalls dreht der Drehantrieb 11 den Ventilkörper 14 entgegen dem Uhrzeigersinn bezogen auf die Fig. 9 bis 12 und die kugelkalottenförmige Außenfläche des Ventilkörpers 14 gleitet dichtend an den entsprechenden Abschnitten der Dichtungsringe 27, 28 entlang. Wo Abschnitte der Dichtungsringe vor der Durchströmungsöffnung 15 liegen, entfällt die Dichtwirkung natürlich und wird während der Drehbewegung des Ventilkörpers 14 durch die Hilfsdichtringe 34, 35 zwischen der Außenseite der Lagerschultern 29 und dem Gehäuserohr 2 kompensiert. Die Anschlagvorsprünge 24, 25 werden bei dieser Drehbewegung von den Kreisbogenkanten 20 der Anschlagvertiefungen 18, 19 geführt und die Drehbewegung damit in sich stabilisiert.

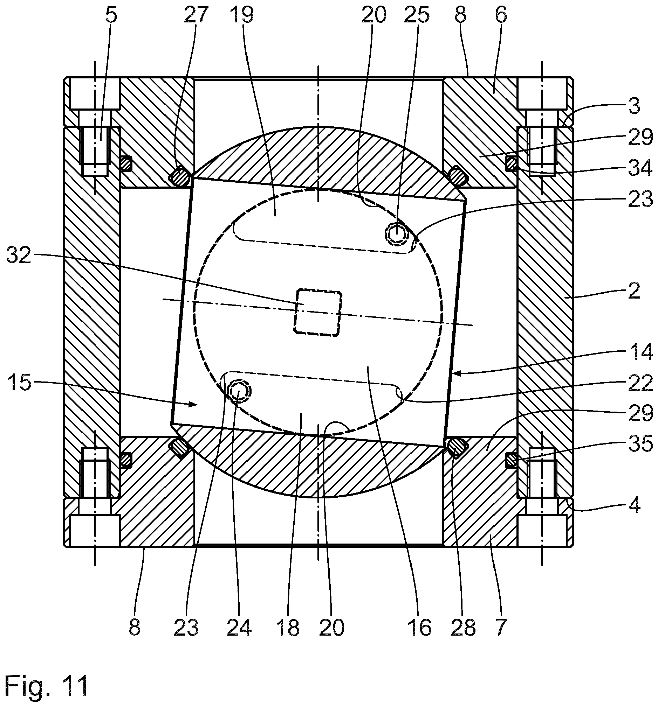

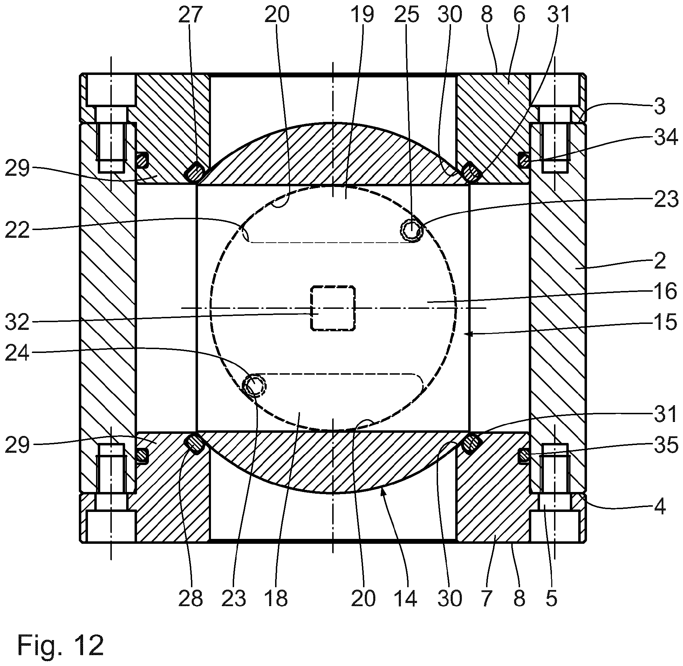

Zum Ende der Drehbewegung (Fig. 11 und 12) gelangen die Dichtungsring 27, 28 und der Ventilkörper 14 wieder in Dichteingriff miteinander, und die Anschlagvorsprünge 24, 25 schlagen an den Endanschlägen 23 an. Der Kugelhahn ist damit geschlossen (Fig. 12) und die Prozessrohrleitung wirkungsvoll gegen die Ausbreitung einer Explosionswelle abgeschottet.

## Patentansprüche

1. Kugelhahn, insbesondere zur Explosionsentkopplung in Prozessrohrleitungen, aufweisend
- ein zur Durchflussrichtung (F) koaxiales Gehäuserohr (2),
- jeweils an den Stirnseiten (3, 4) des Gehäuserohrs (2) angeflanschte Lagerringe (6, 7), die in die Innenöffnung des Gehäuserohrs (2) eingreifende Lagerschultern (29) aufweisen,
- einem zwischen den Lagerschultern (29) über darin eingesetzte Dichtringe (27, 28) um eine senkrecht zur Durchflussrichtung (F) verlaufende Drehachse (D) drehbar angetrieben zwischen einer jeweils beanschlagten Geschlossen- und Offen-Stellung gelagerte Ventilkörper (14) in der Grundform eines Kugelrings mit einer durchgehenden Durchströmungsöffnung (15),
- einen Drehantrieb (11) für den Ventilkörper (14), und
- direkt in den Ventilkörper (14) eingeformte Anschlagvertiefungen (18, 19), die Endanschläge (22, 23) für Anschlagvorsprünge (24, 25) am Gehäuserohr (2) zur Definition der Geschlossen- und Offen-Stellung des Ventilkörpers (14) bilden,
- **dadurch gekennzeichnet, dass** die Anschlagvertiefungen (18, 19) einen kreissegmentförmigen Umriss aufweisen, wobei die Endanschläge (22, 23) durch die Schnittzonen zwischen der Kreisbogenkante (20) und der Kreissehnenkante (21) der Anschlagvertiefungen (18, 19) gebildet sind.

2. Kugelhahn nach Anspruch 1, **dadurch gekennzeichnet, dass** der Ventilkörper (14) rechtwinklig zu seiner Drehachse (D) angeordnete, außenseitige Planflächen (16, 17) zur Ausbildung einer kombinierten Kugelring-Kugelschicht-Form des Ventilkörpers (14) aufweist, wobei die Anschlagvertiefungen (18, 19) in die jeweiligen Planflächen (16, 17) eingeformt sind.

3. Kugelhahn nach einem der vorgenannten Ansprüche, **dadurch gekennzeichnet, dass** der Radius (r20) der Kreisbogenkante (20) dem Abstand der Anschlagvorsprünge (24, 25) von der Drehachse (D) derart entspricht, dass die Kreisbogenkante (20) als Führung bei der Drehbewegung des Ventilkörpers (14) fungiert.

4. Kugelhahn nach einem der vorgenannten Ansprüche, **dadurch gekennzeichnet, dass** die Lagerringe (6, 7) parallel zur Durchflussrichtung (F) variabel in das Gehäuserohr (2) einschraubbar sind.

5. Kugelhahn nach einem der vorgenannten Ansprüche, **dadurch gekennzeichnet, dass** die Dichtringe (27, 28) in Aufnahmenuten (31) sitzen, die in zum Ventilkörper (14) hin abgeschrägten Eckflanken (30) der Lagerringe (6, 7) eingeformt sind.

6. Kugelhahn nach einem der vorgenannten Ansprüche, **dadurch gekennzeichnet, dass** der Ventilkörper (14) mit mindestens einem einstückig angeformten Kupplungsansatz (32) zur Verbindung mit dem Drehantrieb (11) des Kugelhahn versehen ist.

7. Kugelhahn nach einem der vorgenannten Ansprüche, **dadurch gekennzeichnet, dass** die Lagerringe (6, 7) auf ihrer in Durchflussrichtung (F) weisenden Außenseite (8) mit Flanschgewinden (9) zum Anflanschen einer Rohrleitung (1) versehen sind.

8. Kugelhahn nach einem der vorgenannten Ansprüche, **dadurch gekennzeichnet, dass** im oder am Gehäuserohr (2) Drehlagerkörper (10) für den Ventilkörper (14) und einen aufgesattelten Drehantrieb (11) angeordnet sind.

9. Kugelhahn nach einem der vorgenannten Ansprüche, **dadurch gekennzeichnet, dass** der Drehantrieb (11) als pneumatischer oder elektrischer Antrieb oder als Gasgenerator-Antrieb ausgeführt ist.

## Claims

1. A ball valve, in particular for explosion isolation in process pipelines, comprising
- a housing pipe (2) coaxial to the through-flow direction (F),
- bearing rings (6, 7) which are flanged respectively onto the end faces (3, 4) of the housing pipe (2) and have bearing shoulders (29) that engage in the internal opening of the housing pipe (2),
- a valve body (14), in the basic form of a ball ring having a continuous through-flow opening (15), mounted between the bearing shoulders (29) via sealing rings (27, 28) inserted therein so as to be driven in rotation about an axis of rotation (D), extending perpendicularly to the through-flow direction (F), between a respectively stopped closed and open position,
- a rotary drive (11) for the valve body (14), and
- stop recesses (18, 19) which are formed directly in the valve body (14) and form end stops (22, 23) for stop protrusions (24, 25) on the housing pipe (2) in order to define the closed and open position of the valve body (14),
- **characterized in that** the stop recesses (18, 19) have a circular segment-shaped contour, wherein the end stops (22, 23) are formed by the intersection zones between the circular arc edge (20) and the circular chord edge (21) of the stop recesses (18, 19).

2. A ball valve according to claim 1, **characterized in that** the valve body (14) has external planar surfaces (16, 17) arranged at right angles to its axis of rotation (D) to form a combined ball-ring/ball-layer form of the valve body (14), wherein the stop recesses (18, 19) are formed in the respective planar surfaces (16, 17).

3. A ball valve according to any one of the preceding claims, **characterized in that** the radius (r20) of the circular arc edge (20) corresponds to the distance of the stop protrusions (24, 25) from the axis of rotation (D) in such a manner that the circular arc edge (20) acts as a guide during the rotary movement of the valve body (14).

4. A ball valve according to any one of the preceding claims, **characterized in that** the bearing rings (6, 7) can be variably screwed into the housing pipe (2) parallel to the through-flow direction (F).

5. A ball valve according to any one of the preceding claims, **characterized in that** the sealing rings (27, 28) are inserted into receiving grooves (31) which are formed into corner flanks (30) of the bearing rings (6, 7) that are bevelled towards the valve body (14).

6. A Ball valve according to any one of the preceding claims, **characterized in that** the valve body (14) is provided with at least one coupling attachment (32) formed in one piece for connection to the rotary drive (11) of the ball valve.

7. A ball valve according to any one of the preceding claims, **characterized in that** the bearing rings (6, 7) are provided with flange threads (9) on their outer side (8) pointing in the through-flow direction (F) for flange-mounting a pipeline (1).

8. A ball valve according to any one of the preceding claims, **characterized in that** pivot bearing bodies (10) for the valve body (14) and a semi-mounted rotary drive (11) are arranged in or on the housing pipe (2).

9. A ball valve according to any one of the preceding claims, **characterized in that** the rotary drive (11) is designed as a pneumatic or electric drive or as a gas generator drive.

## Revendications

1. Soupape à bille, en particulier pour la protection contre les explosions dans des conduites de traitement, présentant
- un tube de logement (2) coaxial à la direction d'écoulement (F),
- des bagues de palier (6, 7) bridées respectivement sur les faces frontales (3, 4) du tube de logement (2), qui présentent des épaulements de palier (29) s'engageant dans l'ouverture intérieure du tube de logement (2),
- un corps de soupape (14) logé entre les épaulements de palier (29) par l'intermédiaire de bagues d'étanchéité (27, 28) insérées dans ceux-ci, entraîné en rotation autour d'un axe de rotation (D) s'étendant perpendiculairement à la direction d'écoulement (F), entre une position fermée et une position ouverte respectivement en butée, ayant la forme de base d'une bague sphérique avec une ouverture de passage (15) traversante,
- un entraînement rotatif (11) pour le corps de soupape (14), et
- des renfoncements de butée (18, 19) formés directement dans le corps de soupape (14), qui forment des butées d'extrémité (22, 23) pour des saillies de butée (24, 25) sur le tube de logement (2) pour définir la position fermée et la position ouverte du corps de soupape (14),
- **caractérisée en ce que** les renfoncements de butée (18, 19) présentent un contour en forme de segment de cercle, les butées d'extrémité (22, 23) étant formées par les zones d'intersection entre le bord en arc de cercle (20) et le bord en corde de cercle (21) des renfoncements de butée (18, 19).

2. Soupape à bille selon la revendication 1, **caractérisée en ce que** le corps de soupape (14) présente des surfaces planes (16, 17) côté extérieur, disposées perpendiculairement à son axe de rotation (D), pour former une forme combinée d'anneau sphérique et de couche sphérique du corps de soupape (14), les renfoncements de butée (18, 19) étant formés dans les surfaces planes (16, 17) respectives.

3. Soupape à bille selon l'une quelconque des revendications précédentes, **caractérisée en ce que** le rayon (r20) du bord en arc de cercle (20) correspond à la distance entre les saillies de butée (24, 25) et l'axe de rotation (D), de telle sorte que le bord en arc de cercle (20) fait office de guide lors du mouvement de rotation du corps de soupape (14).

4. Soupape à bille selon l'une quelconque des revendications précédentes, **caractérisée en ce que** les bagues de palier (6, 7) peuvent être vissées de manière variable dans le tube de logement (2) parallèlement à la direction d'écoulement (F).

5. Soupape à bille selon l'une quelconque des revendications précédentes, **caractérisée en ce que** les bagues d'étanchéité (27, 28) sont placées dans des rainures de réception (31) qui sont formées dans des flancs d'angle (30) des bagues de palier (6, 7) inclinés vers le corps de soupape (14).

6. Soupape à bille selon l'une quelconque des revendications précédentes, **caractérisée en ce que** le corps de soupape (14) est pourvu d'au moins un embout d'accouplement (32) formé d'un seul tenant pour la liaison avec l'entraînement rotatif (11) de la soupape à bille.

7. Soupape à bille selon l'une quelconque des revendications précédentes, **caractérisée en ce que** les bagues de palier (6, 7) sont pourvues, sur leur côté extérieur (8) orienté dans la direction d'écoulement (F), de filetages de bride (9) pour le bridage d'une conduite tubulaire (1).

8. Soupape à bille selon l'une quelconque des revendications précédentes, **caractérisée en ce que** des corps de palier rotatifs (10) pour le corps de soupape (14) et un entraînement rotatif (11) monté sur celui-ci sont disposés dans ou sur le tube de logement (2).

9. Soupape à bille selon l'une quelconque des revendications précédentes, **caractérisée en ce que** l'entraînement rotatif (11) est réalisé sous la forme d'un entraînement pneumatique ou électrique ou d'un entraînement de générateur de gaz.
